# EUROPÄISCHE PATENTANMELDUNG

(11) **EP 1 543 904 A2**
(43) Veröffentlichungstag der Anmeldung: **22.06.2005**
(21) Anmeldenummer: 04029930.7
(22) Anmeldetag: 17.12.2004
(51) Int. Cl.: B23B 31/107, B23B 29/24

(54) **Werkzeughalter-System**

(30) Priorität: 17.12.2003 DE 20319597 U
(71) Anmelder: Flam, Mirko, 72636 Tischardt (DE)
(72) Erfinder: Flam, Mirko, 72636 Tischardt (DE)
(74) Vertreter: Fürst, Siegfried

(57) **Zusammenfassung**

Die Erfindung betrifft ein Werkzeughalter - System zur Aufnahme und Positionierung von wenigstens einem spanenden Werkzeug (12) an einer Werkzeugmaschine, das wenigstens eine an der Werkzeugmaschine zeitweise positionierbare Werkzeugaufnahme (4; 4') und wenigstens einen in der Werkzeugaufnahme (4; 4') zeitweise positionierbaren Werkzeugadapter (1) umfasst, wobei die Werkzeugaufnahme (4; 4') einen Aufnahmezapfen (4a; 40) und eine Aufnahmehülse (4b) aufweist, die einen gemeinsamen Bund (4c; 48) besitzen, und wobei der Werkzeugadapter (1) einen Adapterzapfen (1b) und gegenüberliegend, also werkzeugseitig einen Aufnahmebereich (1a) aufweist, die durch einen Bund (2) miteinander verbunden und zugleich zueinander beabstandet sind, wobei der an den Bund (48) maschinenseitig anschließende Aufnahmezapfen (40) der Werkzeugaufnahme (4') wenigstens einen Kurzkegel (41), ein Führungsteil (42) und einen Anzugsbolzen (44) mit einem Widerlager (45) umfasst, der Bund (48) eine zum Aufnahmezapfen (40) zeigende Planfläche (47) und die Aufnahme zur Positionierung der Werkzeugaufnahme (4') in der Werkzeugmaschine korrespondierende Flächen aufweist, nebst einer auf den Anzugsbolzen (44) einwirkenden Einrichtung.

## Beschreibung

Die vorliegende Erfindung betrifft ein Werkzeughalter - System nach dem Oberbegriff des Patentanspruchs 1.

Bekannt sind Werkzeugadapter für die lösbare und austauschbare Befestigung eines Bohr-, Fräs-, Säge- oder sonstigen rotierenden Werkzeuges an der Werkzeugaufnahme einer rotierenden Werkzeugspindel einer Bearbeitungsmaschine. Dazu wird z. B. ein Werkzeugschaft eines Werkzeuges an der Werkzeugseite des Adapters in an sich bekannter Weise eingespannt oder festgelegt. Die Maschinenseite des Werkzeugadapters ihrerseits wird an der Werkzeugaufnahme befestigt, wobei entweder die Werkzeugaufnahme lösbar an der rotierenden Werkzeugspindel des Bearbeitungswerkzeugs befestigbar ist oder die Werkzeugaufnahme bereits einen Bestandteil dieser Werkzeugspindel bildet. Der Werkzeugadapter ist dabei im wesentlichen rotationssymmetrisch zur Rotationsachse des Werkzeugs ausgebildet, um bei den bei der Bearbeitung auftretenden hohen Drehgeschwindigkeiten Unwuchten zu vermeiden.

Im Stand der Technik sind Werkzeugadapter bekannt, bei denen ein in axialer Richtung gesehen zur Maschinenseite hin konisch zulaufender Kegelabschnitt mit einem sich zur Werkzeugseite hin daran unmittelbar anschließenden Bund mit einer Plananlage versehen ist, wobei die Oberfläche der Plananlage senkrecht zur Rotationsachse des Werkzeugadapters ausgerichtet ist. An diesen Bund schließt sich die Werkzeugseite mit einer an sich bekannten Vorrichtung zur Befestigung eines Werkzeuges oder Werkzeugschaftes an. Zur Verbindung des Kegelabschnitts des Werkzeugadapters mit der Werkzeugaufnahme dient eine in radialer Richtung angeordnete Querbohrung in dem Werkzeugadapter sowie in der Werkzeugaufnahme. In diese korrespondierenden Bohrungen wird ein Spannbolzen, der ebenfalls über einen kegelförmigen Abschnitt verfügen kann, eingesetzt und üblicherweise über ein Innengewinde in den Bohrungen sowie ein Außengewinde am Spannbolzen festgelegt. Derart wird der Werkzeugadapter in der Werkzeugaufnahme lösbar, austauschbar festgelegt, wobei der Kegelabschnitt zur Führung/Ausrichtung des Werkzeugadapters relativ zur Werkzeugaufnahme dient. Diese Werkzeugaufnahme verfügt hierzu über eine entsprechend kegelförmig ausgebildete Aufnahmeöffnung für den Kegelabschnitt des Werkzeugadapters sowie über eine plane Anschlagsfläche, die in zusammengesetztem Zustand unmittelbar an der Plananlage des Bundes des Werkzeugadapters anliegt und für eine exakte Ausrichtung des Werkzeugadapters relativ zur Werkzeugaufnahme bzw. zur Rotationsachse dient.

Die Adapter werden dazu verwendet, um insbesondere Werkzeuge mit unterschiedlichen Werkzeugschaftdurchmessern an ein und derselben Werkzeugspindel einer Bearbeitungsmaschine verwenden zu können, sowie die Werkzeuge in einfacher und kostengünstiger Weise rasch auszutauschen.

Als nachteilig hierbei hat sich jedoch erwiesen, dass insbesondere wenn mehrere Adapter, in axialer Richtung gesehen, hintereinander verwendet werden sollen, um zum Beispiel in einer Werkzeugspindel mit großem Durchmesser ein Werkzeug mit geringem Schaftdurchmesser verwenden zu können, d.h. also, wenn mehrere Adapter als Zwischenstufen verwendet werden, die exakte axiale Ausrichtung der einzelnen Adapter zueinander und zur Werkzeugspindel mit den bekannten Adaptern nicht möglich ist, da durch das einseitige Einspannen/Festlegen mit einem einzigen Spannbolzen stets ein seitlicher Versatz in axialer Richtung gesehen auftritt. Des weiteren können Kräfte, die senkrecht zur Rotationsachse wirken, was insbesondere beim Fräsen auftritt, mit den bekannten Adaptern nicht in ausreichender Weise aufgefangen werden und es treten Unwuchten auf. Das bedeutet, dass bei einer Querbelastung der Adapter, auch wenn er fest in die Werkzeugaufnahme eingespannt ist, stets einer geringfügigen Verkippung unterliegt, so dass das Bearbeitungsergebnis verschlechtert wird.
Auch bisher bekannte, in der Werkzeugmaschine aufgenommene Aufnahmebereiche der besagten Werkzeugaufnahmen, wie z.B. die Aufnahmen nach der Norm ISO 12164, die so genannten Hohlschaftkegel mit den Formen A, C, E und F, sowie die so genannten Kegelaufnahmen nach DIN 69871 bzw. ANSI/CAT bzw. MAS BT gewährleisten nicht immer die heutzutage geforderten hohen Bearbeitungsgenauigkeiten, insbesondere bei der so genannten Hochgeschwindigkeitsbearbeitung von Werkstücken.

Ausgehend von diesem Stand der Technik ist der Fachmann vor die Aufgabe gestellt, ein Werkzeughalter - System zu schaffen sowie einen Werkzeugadapter dahingehend zu verbessern, dass die axiale Ausrichtung des Adapters sowie des darin festgelegten Werkzeuges relativ zur Werkzeugaufnahme auch beim Auftreten hoher Querbelastungen zuverlässig gewährleistet ist, sowie das Einspannen des Werkzeugadapters in der Werkzeugaufnahme mit korrekter axialer Ausrichtung erfolgt; zudem soll diese Werkzeugaufnahme - als Nebenaufgabe - auch für die Anwendung eines automatischen Werkzeugwechsels ausgestattet sein.

Erfindungsgemäß wird diese Aufgabe durch ein Werkzeughalter - System mit den Merkmalen des Patentanspruchs 1 oder des Patentanspruchs 8 gelöst. Vorteilhafte Ausgestaltungen der Erfindung sind Gegenstand von Unteransprüchen 2 bis 7 und 9 bis 14.

Die Erfindung geht aus von dem neuartigen Werkzeugadapter, der von dem gleichen Anmelder mit der Patentanmeldung mit dem Aktenzeichen DE 103 05 601.7 hinterlegt wurde. Die Verbindungsstelle zwischen jenem Werkzeugadapter und dessen Werkzeugaufnahme wurde für den Gegenstand der vorliegenden Patentanmeldung im Wesentlichen übernommen. Dadurch wird an der Koppelstelle Werkzeugaufnahme / Werkzeugadapter eine präzise axiale Ausrichtung des Adapters bzw. des daran angeordneten Werkzeuges bezüglich deren Rotationsachse bzw. bei stehendem Werkzeug und rotierendem Werkstück bezüglich dessen Rotationsachse erreicht und zum anderen wird Beeinträchtigungen, die durch beim Bearbeiten auftretende Querbelastungen auftreten können, zumindest entgegen gewirkt bzw. werden solche vermieden.

Bei der hier vorliegenden Erfindung ist die Maschinenseite der Werkzeugaufnahme des Werkzeughalter - Systems neu gestaltet. So ist einerseits zur verbesserten, präziseren Positionierung der Werkzeugaufnahme eine Kombination von Merkmalen vorgesehen, die sich dadurch auszeichnet, dass der die Werkzeugseite und die Maschinenseite der Werkzeugaufnahme verbindende und zugleich beide Teile beabstandende Bund maschinenseitig eine Planfläche aufweist, die im wesentlichen bis zum Aufnahmezapfen der Werkzeugaufnahme hin reicht und der Aufnahmezapfen in mehrere Teilbereiche unterteilt ist. Dieser neue Aufnahmezapfen umfasst einen Kurzkegel, ein Führungsteil und einen Anzugsbolzen mit anschließendem Widerlager, die von der Planfläche des Bundes aus gesehen in axialer Richtung zum freien Ende des Aufnahmezapfens hin nacheinander folgend konzentrisch zur Rotationsachse liegend angeordnet sind. Dabei ist das Führungsteil in besagter axialer Richtung gesehen hinter dem Kurzkegel angeordnet oder das Führungsteil ist gemäß einer anderen Ausführungsvariante zwischen der Planfläche und dem Kurzkegel, also vor dem Kurzkegel, angeordnet.
In spezieller Weiterbildung der Erfindung ist vorgesehen, dass das Führungsteil im Querschnitt gesehen eine kreisförmige Umfangsfläche besitzt. Sind vom Werkzeugadapter bzw. der Werkzeugaufnahme große Kräfte aufzunehmen, ist es vorteilhaft, das wenigstens ein Teilbereich des Aufnahmezapfens im Querschnitt gesehen eine unrunde Umfangsfläche besitzt.
Eine andere vorteilhafte Weiterbildung sieht vor, dass die Umfangsfläche des Widerlagers des Anzugsbolzens ebenfalls als - weitere - Führungsfläche ausgebildet ist. Es versteht sich für den Fachmann von selbst, dass die in der Werkzeugmaschine vorgesehene Aufnahme für die Positionierung und Halterung der Werkzeugaufnahme korrespondierend zu selbiger ausgebildet ist. Dabei kann diese Aufnahme in der Werkzeugmaschine einerseits die Antriebsspindel für rotierende Werkzeuge sein oder eine Aufnahme für feststehende Werkzeuge, die an der Werkzeugmaschine, insbesondere in den so genannten Werkzeugrevolvern, vorgesehen ist.
Aufgrund der verkürzten Bauart der neuen Werkzeugaufnahme und der neuen Werkzeugadapter können die neuen Komponenten des Werkzeughalter - Systems auch bevorzugt in Planrevolver eingesetzt werden. Besagte Werkzeugmaschinen können Fräsmaschinen, Bearbeitungszentren, Drehmaschinen, Schleifmaschinen, Holzbearbeitungsmaschinen oder Zubehöreinheiten für Werkzeugmaschinen wie Schleifeinheiten, Rundtaktmaschinen und dgl. Werkzeugmaschinen - Baugruppen sein.

Die Vorteile der neuen Komponenten für das neue Werkzeughalter - System bestehen insbesondere darin, dass bei rotierendem Werkzeug eine sehr gute Rundlauf- und Planlaufgenauigkeit, eine sehr genaue Formschlüssigkeit und eine hohe Kraftübertragung erreicht werden. Das Werkzeughalter - System ist für den Einsatz mit sehr hohen Drehzahlen geeignet, insbesondere auch dadurch, weil keine oder nur minimale Unwuchten bei diesem Werkzeugsystem auftreten.

Es versteht sich von selbst, dass bei dem neuen Werkzeughalter - System auch Einrichtungen für die Innenoder die Außenkühlung des Werkzeuges vorgesehen sein können. Da hierzu an sich bekannte Einrichtungen verwendet werden, wird auf eine weitere detaillierte Darstellung des Kühlsystems verzichtet.

Der Grundgedanke der Erfindung wird andererseits dahingehend ausgebaut, dass für einen günstigeren, insbesondere raumoptimierten Einsatz des neuen Werkzeughalter - Systems an Werkzeugrevolvern von Bearbeitungsmaschinen in neuer Ausführung vorgesehen ist, dass die das Werkzeug oder einen Werkzeugadapter aufnehmende Seite einer Werkzeugaufnahme in den aufgenommenen Bereich der Werkzeugaufnahme, also in der Regel den Aufnahmezapfen, hinein verlegt ist. Hierdurch wird die Baulänge einer Werkzeugaufnahme um wenigstens ein Drittel ihrer sonst üblichen Gesamtlänge verkürzt. Diese spezielle Werkzeugaufnahme, im Weiteren zweite Werkzeugaufnahme genannt, besteht aus einem Hülsenteil und dem als Flansch ausgebildeten Bund der Werkzeugaufnahme. Die äußere Umfangsfläche der Hülse dient zur Aufnahme in einer der Aufnahmebohrungen eines Werkzeugrevolvers.

In einer ersten Ausführung dieser zweiten Werkzeugaufnahme ist der hohle Innenbereich der Werkzeugaufnahme, der von der einen Stirnseite des Flansches bis hin zum gegenüberliegenden Ende des Hülsenteils reicht, für die Aufnahme des Adapterzapfens eines besagten neuen Werkzeugadapters ausgebildet. Das heißt von der Flanschseite aus erstreckt sich nach innen ein Innenkegel, der in einen Führungsdurchmesser übergeht. Im Bereich des Innenkegels sind entsprechend der Gestaltung des Werkzeugadapters mehrere radiale, durchgehende Bohrungen vorgesehen.

Die Befestigung eines Werkzeugadapters bzw. eines Werkzeuges, dessen Aufnahmeschaft die Ausgestaltung eines Adapterzapfens besitzt, erfolgt bevor die zweite Werkzeugaufnahme in den Werkzeugrevolver eingesteckt wird. Die Befestigung der Werkzeugaufnahme an der betreffenden, dem Flansch zugewandten Anschlagfläche des Werkzeugrevolvers erfolgt in an sich bekannter Weise. Hierzu sind im Flansch der zweiten Werkzeugaufnahme entsprechende Befestigungspunkte ( Durchgangsbohrungen und eventuell ein oder mehrere Positionierzapfen ) vorgesehen.

In einer zweiten Ausführung ist die innere Aufnahme der zweiten Werkzeugaufnahme mit mehreren zueinander gestuften Innendurchmessern ausgestattet. Zudem ist im Endbereich des Hülsenteils eine Durchgangsbohrung vorgesehen. In diese gestuften Innendurchmesser ist ein an sich bekanntes Drehlager einsetzbar, welches für die Aufnahme des Adapterzapfens eines speziellen Werkzeugadapters ausgebildet ist. Der Aufnahmebereich, also die Werkzeugseite, dieses speziellen Werkzeugadapters ist für die Aufnahme eines Werkzeuges oder eines weiteren Werkzeugadapters vorgesehen.

Dieser weitere Werkzeugadapter ist entweder ein Längen reduzierender Werkzeugadapter oder ein Längen verlängernder Werkzeugadapter. Dabei kann dieses Reduzierstück bzw. Verlängerungsstück an seinem werkzeugseitigen Ende zur Aufnahme eines Werkzeuges ausgebildet sein, z.B. als so genannter Welldon-Schaft oder als Gewindebohrerhalter oder als Adapter für Einschraubfräser oder als Schrumpffutterteil oder als Spannzangenfutterteil oder als Adapterdorn in Form eines Aufsteckfräserdornes. Die vorgenannte Adapterhülse oder der Adapterdorn ist in einer weiteren Ausführungsvariante zur Aufnahme von Drehstähle oder Wendeschneidplatten ausgebildet.

Durch die erfindungsgemäß gestaltete zweite Werkzeugaufnahme in ihrer ersten und zweiten Ausführung wird erreicht, dass in einem Werkzeugrevolver eine Baulängenreduzierung für feststehende, als auch für rotierende Werkzeuge erreicht ist. Die Vorteile dieser Ausführung der Erfindung gegenüber bekannten Werkzeughaltern für Werkzeugrevolver sind insbesondere eine sehr genaue Rund- und Planlaufgenauigkeit, eine kurze Bauweise, geringe Massekräfte, hohe Kräfteaufnahme, insbesondere bei Fräsarbeiten. Zudem ist die Möglichkeit der Voreinstellung der Werkzeuge außerhalb der Maschine in höchster Genauigkeit gewährleistet. Weiterhin kann durch die kurze Bauweise bei Bedarf am Plan- oder Sternrevolver in dessen Zentrum ein Mittenarbeitsplatz vorgesehen werden, der seinerseits ebenfalls als ein Werkzeugrevolver, z.B. ein Kronenrevolver, ausgebildet werden kann.

Weitere Einzelheiten, Merkmale und Vorteile der Erfindung werden in dem folgenden Beschreibungsteil genannt und näher erläutert und sind zudem in Verbindung mit der Beschreibung den in Zeichnungen schematisiert dargestellten Ausführungsbeispielen der Erfindung entnehmbar. Dabei zeigen:
- **Figur 1a bis 1f:**: bekannte Werkzeugaufnahmen mit deren Zapfenteil, Hohlschaftkegel-Varianten und Steilkegel-Varianten;
- Figur 2:: einen Werkzeugadapter nach der Patentanmeldung DE 103 05 601.7, aufgenommen in einer Werkzeugaufnahme;
- Figur 3, 3a, 3b:: eine Werkzeugaufnahme mit neuartiger Maschinenseite;
- Figur 4:: einen neuartigen Werkzeugadapter als Verlängerungsstück und
- Figur 5:: einen neuen Werkzeugadapter als Reduzierstück,
und die
- Figuren 6, 7, 8:: eine neue zweite Werkzeugaufnahme in einer ersten und einer zweiten Ausführung, teils eingesteckt in die Aufnahmebohrung eines im Schnitt dargestellten Sternrevolvers.

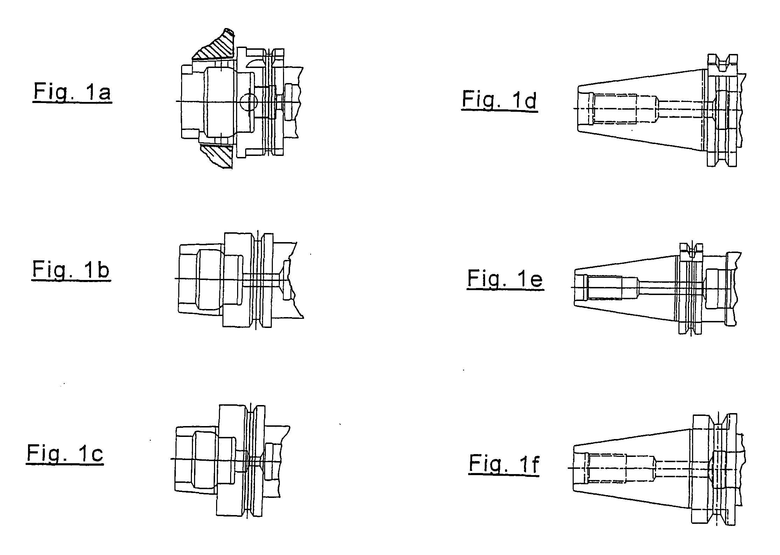

Die Figuren 1a bis 1c zeigen eine Werkzeugaufnahme nach dem Stand der Technik, bei denen deren maschinenseitiges Aufnahmeteil in Form eines Hohlschaftkegels nach ISO 12164 ausgebildet ist. In Reihenfolge werden die Formen A und C, E und F gezeigt. In den Figuren 1d bis 1f ist je eine bekannte Werkzeugaufnahme gezeigt, deren maschinenseitiges Aufnahmeteil als Steilkegel ausgebildet ist und zwar in Reihenfolge der Figuren nach DIN 69871, nach ANSI/CAT und nach der Norm MAS BT.

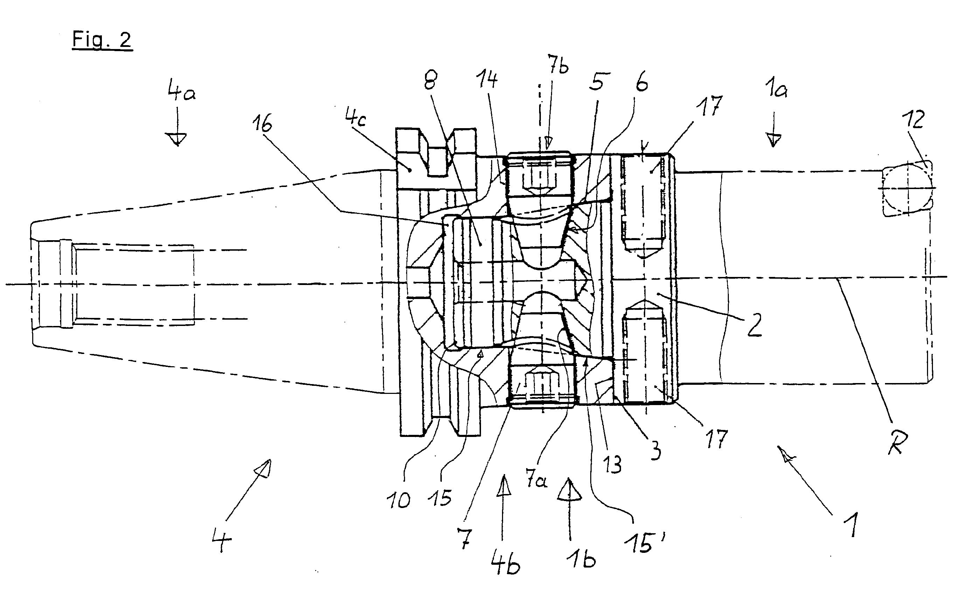

In der Figur 2 ist zum besseren Verständnis der vorgestellten Erfindung ein Werkzeugadapter nach der Patentanmeldung mit dem Aktenzeichen DE 103 05 601.7 des gleichen Anmelders gezeigt.

Der Werkzeugadapter 1, ist im Wesentlichen zur Rotationsachse R symmetrisch ausgebildet. Der Werkzeugadapter 1 verfügt über einen Bund 2 mit einer Plananlage 3, die im wesentlichen senkrecht zur Rotationsachse R ausgerichtet ist. In zusammengesetztem Zustand des Werkzeugadapters 1 mit der Werkzeugaufnahme 4 liegt diese Plananlage 3 im wesentlichen vollflächig und unmittelbar an der Anschlagsfläche 13 der Werkzeugaufnahme 4 an. Die Plananlage 3 kann auch einen Hohlschliff aufweisen, das heißt sie ist geringfügig gegen die Senkrechte zur Rotationsachse R geneigt, wobei der radial äußere Bereich der Plananlage 3 beim Verspannen des Werkzeugadapters 1 mit der Werkzeugaufnahme 4 zuerst mit der Anschlagsfläche 13 in Berührung kommt. An den Bund 2 schließt sich zur Werkzeugseite 1a hin ein Adapterdorn an, an dessen freies Ende in an sich bekannter Weise eine Befestigungsvorrichtung für Werkzeuge 12 vorgesehen ist.

An den Bund 2 schließt sich zur Maschinenseite 1b hin ein Kegelabschnitt 5 an, der zur Führung und Ausrichtung des Werkzeugadapters 1 bezüglich der Werkzeugaufnahme 4 dient. Zur Aufnahme des Kegelabschnittes 5 ist in der Werkzeugaufnahme 4 ein von dessen Anschlagsfläche 13 aus nach innen gerichteter Innenkegel 15' eingearbeitet. In dem Kegelabschnitt 5 sind symmetrisch über dessen Umfang verteilt Querbohrungen 6 eingebracht, vorzugsweise zwei diametral einander gegenüberliegende. In diesen Querbohrungen 6 sowie in korrespondierende Bohrungen 14 in der Aufnahmehülse 4b der Werkzeugaufnahme 4, bevorzugt Gewindebohrungen, sind Spannbolzen 7 angeordnet, um den Werkzeugadapter 1 lösbar an der Werkzeugaufnahme 4 festzulegen bzw. zu verspannen.

Die Spannbolzen 7 weisen vorzugsweise ebenfalls einen Kegelabschnitt 7a auf, wobei die Bohrung 14 in der Werkzeugaufnahme 4 und/oder die Querbohrung 6 im Werkzeugadapter 1 korrespondierend ausgebildet sind. Der Spannbolzen 7 ist in einfacher Weise mit einem Inbusschlüssel, der in eine entsprechende Öffnung 7b im Spannbolzen 7 eingreifen kann, in die Bohrungen 14, 6 einschraubbar.
Mit diesen Spannbolzen 7 ist zudem erreicht, dass der Adapter 1 in der Werkzeugaufnahme 4 symmetrisch einspannbar ist. Dies ist insbesondere dann möglich, wenn die Spannbolzen 7 sukzessive nacheinander, z.B. in den als Gewindebohrungen ausgelegten Querbohrungen 14, schrittweise angezogen werden.

An den Kegelabschnitt 5 des Werkzeugadapters 1 schließt sich unmittelbar und einstückig daran angeformt ein Zylinderabschnitt 8 an, dessen Radius über seine Längserstreckung im wesentlichen konstant ist. Dieser Zylinderabschnitt 8 greift in eine entsprechend ausgebildete, dem Innenkegel 15' nachgeordnete zylindrische Ausnehmung 15 in der Werkzeugaufnahme 4 ein, wobei der Umfang des Zylinderabschnitts 8 im Wesentlichen vollflächig und unmittelbar an der inneren Wandung der zylindrischen Ausnehmung 15 anliegt. Dieser Zylinderabschnitt 8 nimmt dadurch die beim Bearbeiten auftretenden Querkräfte auf und verhindert, dass der Werkzeugadapter 1 seitlich verkippt.

Das freie Ende des Zylinderabschnitts 8 ist zur Erleichterung des Einführens des Werkzeugadapters 1 in die korrespondierende Öffnung der Werkzeugaufnahme 4 mit einer Fase 10 versehen, so dass das freie Ende konisch zulaufend ausgebildet ist. An der zylindrischen Ausnehmung 15 der Werkzeugaufnahme 4 ist zudem eine entsprechende Radiuserweiterung 16 vorgesehen.
Des weiteren sind an dem Bund 2 radial gerichtete Bohrungen 17 ausgebildet, insbesondere sechs symmetrisch über den Umfang verteilt, um bei Bedarf, wie vorstehend genannt, Auswuchtgewichte an dem Werkzeugadapter 1 anzubringen.
Die Werkzeugaufnahme 4 ist hier mit einer nur prinzipiell angedeuteten an sich bekannten Einspannvorrichtung 4a (Aufnahmezapfen in Form eines Steilkegels) versehen, um die Werkzeugaufnahme 4 ihrerseits an der Werkzeugmaschine einzuspannen. Mit dem Bezugszeichen 4c ist der Bund der Werkzeugaufnahme 4 bezeichnet.

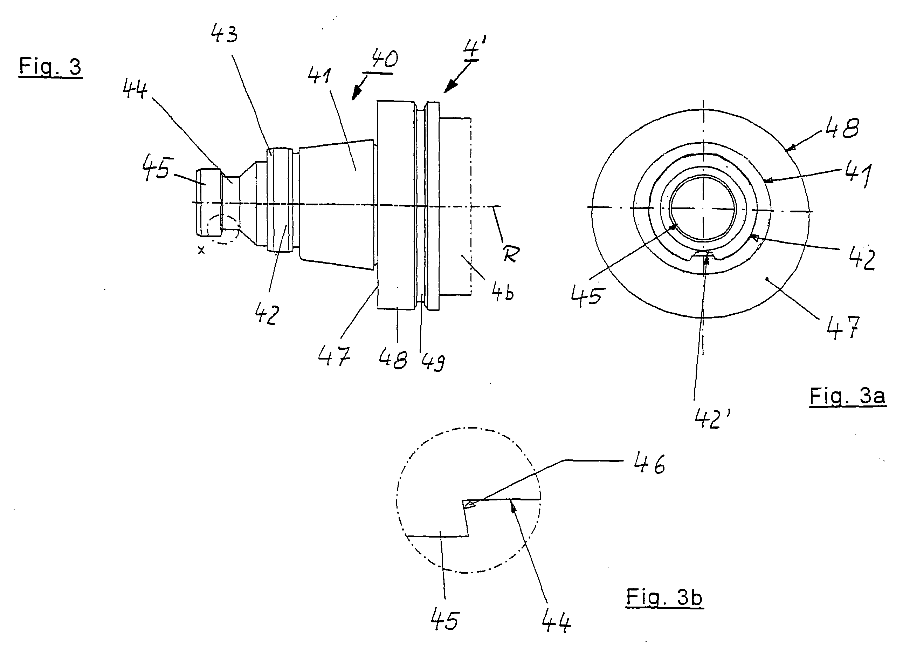

In den Figuren 3, 3a und 3b ist eine Werkzeugaufnahme 4' des neuen Werkzeughalter - System in verschiedenen Ansichten gezeigt. Bei dieser neuen Werkzeugaufnahme 4' ist der Aufnahmezapfen 40 speziell gestaltet. Der an den Bund 48 maschinenseitig anschließende Aufnahmezapfen 40 der Werkzeugaufnahme 4' umfasst einen Kurzkegel 41, ein Führungsteil 42 und einen Anzugsbolzen 44 mit einem Widerlager 45, die in axialer Richtung zum freien Ende des Aufnahmezapfens hin nacheinander folgend konzentrisch zur Rotationsachse liegend angeordnet sind.

Der Bund 48 besitzt eine zum Aufnahmezapfen 40 hin zeigende Planfläche 47 sowie eine in seine Umfangsfläche eingearbeitete Rille 49. Diese Rille 49 ist für den Eingriff eines Greifelementes einer Werkzeugwechseleinrichtung ausgelegt.

Die Aufnahme zur Positionierung dieser Werkzeugaufnahme 4' in der in den Figuren nicht dargestellten Werkzeugmaschine weist korrespondierende Flächen auf, nebst einer auf den Anzugsbolzen 44 einwirkenden Einrichtung.
Werkzeugseitig schließt an den Bund 48 eine Aufnahmehülse 4b an, die für die Aufnahme eines Werkzeugadapters ausgestaltet ist.

Das Führungsteil 42 ist bei der gezeigten Ausführungsvariante, Fig. 3, in axialer Richtung zum freien Ende des Aufnahmezapfens 40 hin gesehen nach dem Kurzkegel 41 angeordnet. Im Querschnitt gesehen ist die Umfangsfläche des Führungsteiles 42 vorzugsweise kreisförmig. An der maschinenseitigen Kante der Umfangsfläche ist eine Fase 43 angearbeitet, die bei der Einsteckbewegung als Einführungshilfe wirkt. Zur Orientierung und Positionierhilfe ist in der Umfangsfläche des Führungsteiles 42 wenigstens eine Orientierungsnut 42' angeordnet, s. hierzu in Fig. 3a, die eine Sicht in axialer Richtung zeigt.

Die Umfangsfläche des Widerlagers 45 des Anzugsbolzen 44 ist bei dieser Ausführung ebenfalls als Führungsfläche ausgebildet. Die Übergangsfläche vom Durchmesser des Anzugsbolzens 44 zur Umfangsfläche des Widerlagers 45 hin ist als Hinterschneidung 46, s. Fig. 3b, ausgeführt,

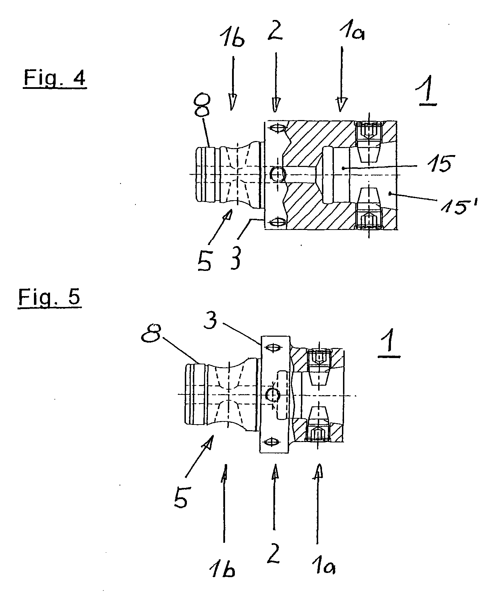

Eine weitere Ausführungsvariante der Erfindung ist in den Figuren 4 und 5 gezeigt. So ist ein Werkzeugadapter des neuen Werkzeughalter - Systems entweder ein Längen reduzierender Werkzeugadapter 1 oder ein Längen verlängernder Werkzeugadapter 1. Dabei ist dieses Reduzierstück bzw. Verlängerungsstück an seinem werkzeugseitigen Ende zur Aufnahme eines weiteren Werkzeugadapters ausgebildet. Die in diesen Figuren verwendeten Bezugszeichen haben die gleiche Bedeutung wie in der Figur 2, sodass hier nicht wiederholt wird.

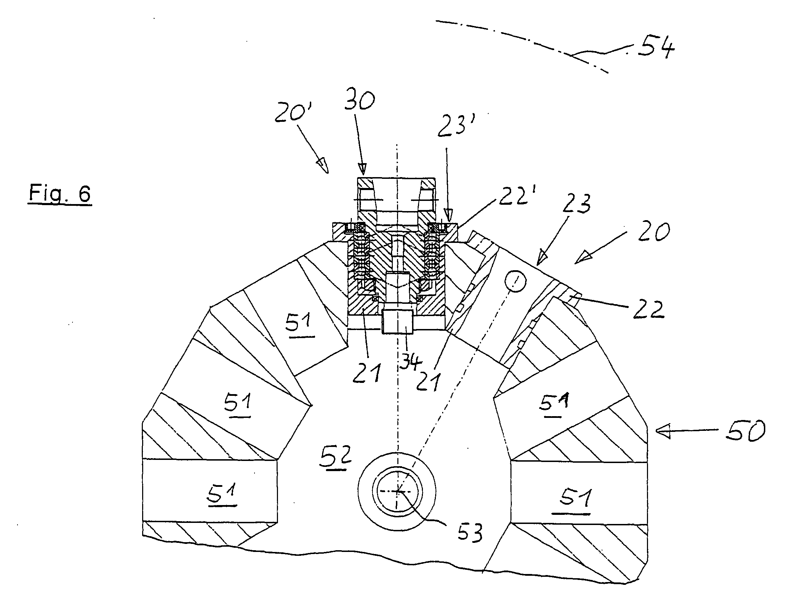

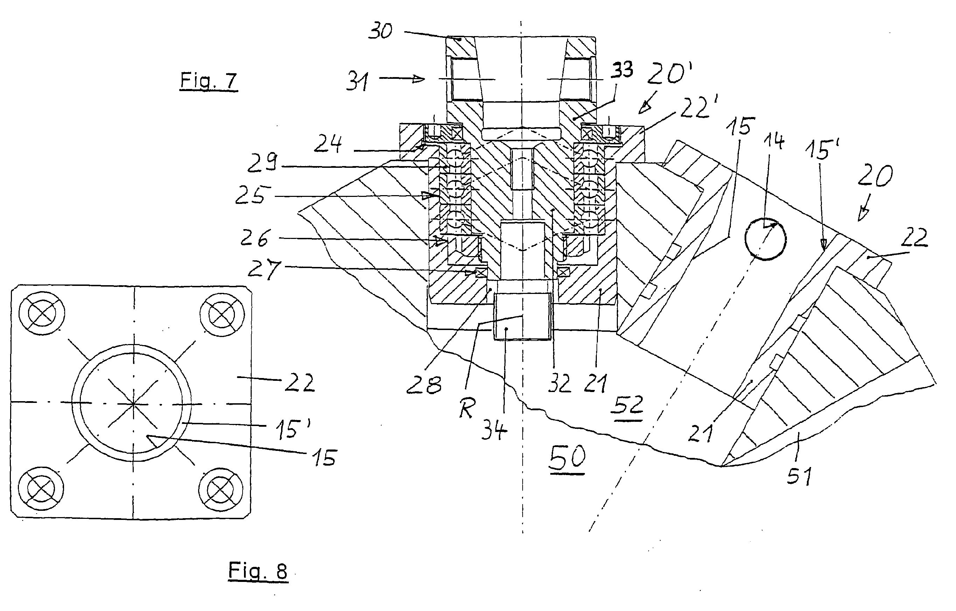

Ein weiteres Ausführungsbeispiel ist in den Figuren 6, 7 und 8 gezeigt. Ausgehend vom Grundgedanken ist die Erfindung hier dahingehend weiterentwickelt, dass für einen günstigeren, insbesondere raumoptimierten Einsatz des neuen Werkzeughalter - Systems an Werkzeugrevolvern 50 von Bearbeitungsmaschinen die das Werkzeug oder einen Werkzeugadapter 1 oder 30 aufnehmende Seite einer zweiten Werkzeugaufnahme 20 bzw. 20' in den aufgenommenen Bereich 21 der zweiten Werkzeugaufnahme 20 bzw. 20', also in der Regel den Aufnahmezapfen, hinein verlegt, also in letzteren integriert ist. Hierdurch ist die Baulänge einer Werkzeugaufnahme um wenigstens ein Drittel ihrer sonst üblichen Gesamtlänge verkürzt. Diese spezielle zweite Werkzeugaufnahme 20 bzw. 20' besteht jeweils aus einem Hülsenteil 21 und dem als Flansch 22 bzw.22' ausgebildeten Bund der Werkzeugaufnahme 20 bzw. 20'. Die äußere Umfangsfläche des Hülsenteils 21 ist zur Positionierung im Werkzeugrevolver 50 - hier ein Sternrevolver - in eine seiner Aufnahmebohrungen 51 eingesteckt. Der Werkzeugrevolver 50 ist in den Figuren 6 und 7 in schematischer Darstellung angedeutet. Es sind mehrere radial gerichtete Aufnahmebohrungen 51 vorgesehen. Mit 53 ist die Drehachse dieses Revolvers bezeichnet. Die Aufnahmenbohrungen 51 enden körpereinwärts in einen zentralen Innenhohlraum 52. In Figur 6 ist mit der Strichpunktlinie 54 schematisch der für die im Revolver aufgenommenen Werkzeugen freie Bewegungsraum markiert (Raumgrenze).
Die Befestigung der zweiten Werkzeugaufnahme 20 bzw. 20' an der betreffenden, dem Flansch 22 bzw. 22' zugewandten Anschlagfläche des Werkzeugrevolvers 50 erfolgt in an sich bekannter Weise. Hierzu sind im Flansch 22 bzw. 22' der zweiten Werkzeugaufnahme 20 bzw. 20' entsprechende Befestigungspunkte ( Durchgangsbohrungen und eventuell ein oder mehrere Positionierzapfen ) vorgesehen.
In einer ersten Ausführung dieser zweiten Werkzeugaufnahme 20 ist der hohle Innenbereich der Werkzeugaufnahme 20, der von der einen Stirnfläche 23 des Flansches 22 bis hin zum gegenüberliegenden Ende des Hülsenteils 21 reicht, für die Aufnahme des Adapterzapfens eines besagten neuen Werkzeugadapters 1 ausgebildet. Das heißt von der Flanschseite 22 aus erstreckt sich nach innen ein Innenkegel 15', der in einen Führungsdurchmesser 15 übergeht. Im Bereich des Innenkegels 15' sind entsprechend der Gestaltung des Werkzeugadapters mehrere radiale, durchgehende Bohrungen 14 vorgesehen.

In einer zweiten Ausführung ist die innere Aufnahme der zweiten Werkzeugaufnahme 20' mit mehreren zueinander abgestuften Innendurchmessern 24, bis 27 (Abschnitte) ausgestattet. Zudem ist im Endbereich des Hülsenteils 21 eine Durchgangsbohrung 28 vorgesehen. In diese abgestuften Innendurchmesser 24, ... 27 ist ein an sich bekanntes Drehlager 29 einsetzbar, welches für die Aufnahme des Adapterzapfens 32 eines speziellen Werkzeugadapters 30 ausgebildet ist. Maschinenseitig besitzt der Adapterzapfen 32 noch eine einstückig angeformte oder lösbar befestigte Kupplung 34. Mit dieser Kupplung 34 wird die Verbindung zu einer nicht dargestellten, an sich bekannten Antriebsspindel der Werkzeugmaschine hergestellt. Durch diese Wirkverbindung kann der Werkzeugadapter 30 und mit ihm das aufgenommene Werkzeug wahlweise in Rotation versetzt werden. Der Adapterzapfen 32 und der Aufnahmebereich 31 des Werkzeugadapters 30 sind durch den Bund 33 einstückig miteinander verbunden. Der Aufnahmebereich 31, also die Werkzeugseite, dieses speziellen Werkzeugadapters 30 ist für die Aufnahme eines Werkzeuges oder eines weiteren Werkzeugadapters 1 vorgesehen.

Alle in der vorstehenden Beschreibung erwähnten sowie auch die allein aus den Zeichnungen entnehmbaren Merkmale sind weitere Bestandteile der Erfindung auch wenn sie nicht besonders hervorgehoben und in den Ansprüchen erwähnt sind.
Die Erfindung ist nicht auf das Ausführungsbeispiel beschränkt, sondern im Rahmen der Offenbarung vielfach variabel; so ist das neue Werkzeughalter-System für während dem Spanvorgang rotierende und auch bei selbigem nichtrotierende Werkzeuge einsetzbar.

### Bezugszeichenliste

- 1: Werkzeugadapter
- 1a: Werkzeugseite von Pos. 1 (Aufnahmebereich, Adapterhülse, -dorn)
- 1b: Maschinenseite von Pos. 1 (Adapterzapfen)
- 2: Bund von Pos. 1
- 3: Plananlage an Pos. 2
- 4, 4': Werkzeugaufnahme
- 4a: Aufnahmezapfen (Einspannvorrichtung von Pos. 4)
- 4b: Aufnahmehülse
- 4c: Bund
40 Aufnahmezapfen
41 Kurzkegel
42 Führungsteil (scheibenförmig)
42' Orientierungsnut in Pos. 42
43 Einführfase
44 Anzugsbolzen
45 Widerlager (zylindrisch)
46 Hinterschneidung
47 Planfläche (Stirnfläche)
48 Bund
49 Rille
- 5: Kegelabschnitt von Pos. 1
- 6: Querbohrung in Pos. 5
- 7: Spannbolzen
- 7a: Kegelabschnitt von Pos. 7
- 7b: Inbuss in Pos. 7
- 8: Zylinderabschnitt von Pos. 1
- 10: Fase an Pos. 8
- 12: Schneide eines Werkzeugs
- 13: Anschlagsfläche an Pos. 4
- 14: radiale Bohrung in Pos. 4
- 15: zylindrische Ausnehmung in Pos. 4
- 15': Innenkegel in Pos. 4
- 16: Radiuserweiterung in Pos. 15
- 17: Bohrung in Pos. 2
- 20, 20': zweite Werkzeugaufnahme
- 21: Hülsenteil
- 22, 22': Flansch
- 23, 23': Stirnflächen
- 24, 25, 26, 27: Innendurchmesser
- 28: Durchgangsbohrung
- 29: Drehlager
- 30: Werkzeugadapter
- 31: Aufnahmebereich
- 32: Adapterzapfen (gestuft)
- 33: Bund
- 34: Kupplung
- 50: Sternrevolver
- 51: Bohrungen in Pos. 50
- 52: Innenhohlraum
- 53: Drehachse von Pos. 50
- 54: Raumgrenze
- R: Rotationsachse

## Patentansprüche

1. Werkzeughalter - System zur Aufnahme und Positionierung von wenigstens einem spanenden Werkzeug (12) an einer Werkzeugmaschine, das wenigstens eine an der Werkzeugmaschine zeitweise positionierbare Werkzeugaufnahme (4; 4') und wenigstens einen in der Werkzeugaufnahme (4; 4') zeitweise positionierbaren Werkzeugadapter (1) umfasst, wobei die Werkzeugaufnahme (4; 4') einen Aufnahmezapfen (4a; 40) und eine Aufnahmehülse (4b) aufweist, die einen gemeinsamen Bund (4c; 48) besitzen, und wobei der Werkzeugadapter (1) einen Adapterzapfen (1b) und gegenüberliegend, also werkzeugseitig einen Aufnahmebereich (1a) aufweist, die durch einen Bund (2) miteinander verbunden und zugleich zueinander beabstandet sind,
**dadurch gekennzeichnet , dass**
der an den Bund (48) maschinenseitig anschließende Aufnahmezapfen (40) der Werkzeugaufnahme (4') wenigstens einen Kurzkegel (41), ein Führungsteil (42) und einen Anzugsbolzen (44) mit einem Widerlager (45) umfasst, dass der Bund (48) eine zum Aufnahmezapfen (40) zeigende Planfläche (47) aufweist, und dass die Aufnahme zur Positionierung der Werkzeugaufnahme (4') in der Werkzeugmaschine korrespondierende Flächen aufweist, nebst einer auf den Anzugsbolzen (44) einwirkenden Einrichtung.

2. Werkzeughalter - System nach Anspruch 1,
**dadurch gekennzeichnet, dass**
das Führungsteil (42) in axialer Richtung zum freien Ende des Aufnahmezapfens (40) hin gesehen nach dem Kurzkegel (41) angeordnet ist.

3. Werkzeughalter - System nach Anspruch 1,
**dadurch gekennzeichnet, dass**
das Führungsteil (42) in axialer Richtung zum freien Ende des Aufnahmezapfens (40) hin gesehen vor dem Kurzkegel (41) angeordnet ist.

4. Werkzeughalter - System nach einem der Ansprüche 1 bis 3,
**dadurch gekennzeichnet , dass**
die Umfangsfläche des Führungsteiles (42) im Querschnitt gesehen eine kreisförmige Form hat.

5. Werkzeughalter - System nach einem der Ansprüche 1 bis 3,
**dadurch gekennzeichnet, dass**
die Umfangsfläche des Führungsteiles (42) im Querschnitt gesehen eine unrunde Form hat.

6. Werkzeughalter - System nach einem der Ansprüche 1 bis 5,
**dadurch gekennzeichnet, dass**
die Umfangsfläche des Widerlagers (45) des Anzugsbolzen (44) als Führungsfläche ausgebildet ist.

7. Werkzeughalter - System nach einem der Ansprüche 1 bis 6,
**dadurch gekennzeichnet, dass**
die Übergangsfläche vom Durchmesser des Anzugsbolzens (44) zur Umfangsfläche des Widerlagers (45) hin eine Hinterschneidung (46) ist.

8. Werkzeughalter - System zur Aufnahme und Positionierung von wenigstens einem spanenden Werkzeug (12) an einer Werkzeugmaschine, das wenigstens eine an der Werkzeugmaschine zeitweise positionierbare Werkzeugaufnahme ( 20; 20') und wenigstens einen in der Werkzeugaufnahme (20; 20') zeitweise positionierbaren Werkzeugadapter (1; 30) umfasst, wobei die Werkzeugaufnahme (20; 20') einen Aufnahmezapfen (21) und eine Aufnahmehülse (21) aufweist, die einen gemeinsamen Bund (22; 22') besitzen, und wobei der Werkzeugadapter (1;30) einen Adapterzapfen (1b; 32) und gegenüberliegend, also werkzeugseitig einen Aufnahmebereich (1a; 31) aufweist, die durch einen Bund (2; 33) miteinander verbunden und zugleich zueinander beabstandet sind,
**dadurch gekennzeichnet, dass**
der das Werkzeug oder einen Werkzeugadapter (1 oder 30) aufnehmende Bereich (Seite) einer zweiten Werkzeugaufnahme (20 bzw. 20' ) zumindest teilweise in dem von der Werkzeugmaschine aufgenommenen Bereich (21) dieser zweiten Werkzeugaufnahme (20 bzw. 20' ), in der Regel in deren Aufnahmezapfen, angeordnet ist.

9. Werkzeughalter - System nach Anspruche 8,
**dadurch gekennzeichnet, dass**
jede zweite Werkzeugaufnahme (20 bzw. 20' ) aus einem Hülsenteil (21) und dem jeweils als Flansch (22 bzw.22' ) angeformten Bund der Werkzeugaufnahme (20 bzw. 20' ) besteht, wobei die äußere Umfangsfläche des Hülsenteils (21) in einer Aufnahmebohrung (51) eines Werkzeugrevolver (50) positionierbar ist.

10. Werkzeughalter - System nach Anspruch 9,
**dadurch gekennzeichnet, dass**
der Flansch (22 bzw. 22' ) an der betreffenden, letzterer zugewandten Anschlagfläche des Werkzeugrevolvers (50) lösbar festgelegt ist, wobei im bzw. am Flansch (22 bzw. 22') entsprechende Befestigungspunkte (Durchgangsbohrungen und eventuell ein oder mehrere Positionierzapfen ) angeordnet sind.

11. Werkzeughalter - System nach einem der Ansprüche 8 bis 10,
**dadurch gekennzeichnet, dass**
der innere Bereich der Werkzeugaufnahme (20) von der einen Stirnfläche (23) des Flansches (22) aus bis hin zum gegenüberliegenden Ende des Hülsenteils (21) mit einem konzentrisch angeordneten Führungsdurchmesser (15) durchsetzt ist, wobei von der Stirnfläche (23) aus ein Innenkegel (15') konzentrisch in einen Teilabschnitt in den Führungsdurchmesser (15) hinein ragt.

12. Werkzeughalter - System nach Anspruch 11,
**dadurch gekennzeichnet , dass**
im Bereich des Innenkegels (15' ) entsprechend der Bauart des aufzunehmenden Werkzeugadapters mehrere radiale, durchgehende Bohrungen (14) in der Werkzeugaufnahme (20) angeordnet sind.

13. Werkzeughalter - System nach einem der Ansprüche 8 bis 10,
**dadurch gekennzeichnet, dass**
die innere Aufnahme der zweiten Werkzeugaufnahme (20') mehrere Abschnitte mit zueinander abgestuften Innendurchmessern (24, 25, 26 und 27) aufweist, zur Aufnahme eines Drehlagers (29), wobei in dem Drehlager (29) ein Werkzeugadapter (30) mit seinem Adapterzapfens (32) gelagert ist.

14. Werkzeughalter - System nach Anspruch 13,
**dadurch gekennzeichnet, dass**
der Endbereich des Hülsenteils (21 ) eine Durchgangsbohrung (28) besitzt, die von einer mit dem Adapterzapfen (32) verbundenen Kupplung (34) durchsetzt ist, wobei die Kupplung (34) mit einer Welle eines Antriebes der Werkzeugmaschine in Wirkverbindung steht.
